# FASCICULE DE BREVET EUROPEEN

(11) **EP 2 691 670 B1**
(45) Date de publication et mention de la délivrance du brevet: **29.07.2015**
(21) Numéro de dépôt: 12714798.1
(22) Date de dépôt: 16.03.2012
(51) Int. Cl.: F16F 15/131, F16B 41/00

(54) **VOLANT MOTEUR EQUIPE DE MOYENS DE RETENUE DES VIS DE FIXATION SUR LE VILEBREQUIN**
SCHWUNGMASSE MIT VERLIERSICHERUNGSMITTEL DER SCHRAUBEN ZUR BEFESTIGUNG AN DER KURBERWELLE
FLYWHEEL MASS WITH MEANS PREVENTING LOSS OF THE SCREWS ATTACHING IT TO THE CRANKSHAFT.

(30) Priorité: 28.03.2011 FR 1151625
(43) Date de publication de la demande: 05.02.2014
(73) Titulaire: Valeo Embrayages, 80009 Amiens Cedex 2 (FR)
(72) Inventeur: FENIOUX, Daniel, Saleux 80480 (FR)
(74) Mandataire: Tran, Chi-Hai
(86) Numéro de dépôt international: PCT/FR2012/050555
(87) Numéro de publication internationale: WO 2012/131215

(56) Documents cités:
- EP-A1- 0 532 392
- EP-A2- 1 881 211
- DE-A1- 19 545 628
- DE-A1-102008 030 801
- DE-A1-102009 009 365
- DE-A1-102010 009 298
- DE-U1- 9 416 583
- DE-U1-202009 012 531
- FR-A1- 2 690 722
- FR-A1- 2 765 293

## Description

La présente invention concerne un volant moteur, en particulier pour une transmission de véhicule automobile.

Le document FR 2 765 293-A1 divulgue un volant moteur du type double volant amortisseur. Le volant moteur comprend un volant d'inertie primaire destiné à être fixé en bout d'un vilebrequin par des vis engagées dans des orifices du volant primaire, un volant d'inertie secondaire coaxial au volant primaire, et un amortisseur de torsion ainsi que des moyens de frottement pour l'absorption et l'amortissement des vibrations et des acyclismes de rotation, qui sont montés entre les deux volants d'inertie.

Le double volant amortisseur comporte en outre des moyens de retenue des vis entre les deux volants permettant d'éviter la perte accidentelle des vis avant fixation du volant primaire sur le vilebrequin.

Ces moyens de retenue sont constitués par un organe annulaire fixé au volant primaire et présentant des orifices de passage des vis et des pattes longitudinales délimitant des cages cylindriques s'étendant axialement depuis les bords des orifices, ces pattes étant destinées à s'appliquer élastiquement sur les contours des têtes de vis. Les extrémités libres des pattes de chaque cage délimitent entre elles une ouverture de passage d'un outil de vissage et permettent l'accès de l'outil aux têtes des vis.

Lors du vissage des vis, les têtes des vis se déplacent à l'intérieur des cages jusqu'à s'appuyer sur le volant primaire.

Ces moyens de retenue des vis présentent un encombrement axial important. Aussi, ces moyens de retenue ne sont particulièrement pas adaptés à un volant moteur de type double volant amortisseur destiné à équiper un double embrayage. En effet, pour une telle application, l'espace axial disponible pour loger le double volant amortisseur est relativement faible.

L'invention a notamment pour but d'apporter une solution simple, efficace et économique à ce problème.

A cet effet, elle propose un volant moteur, en particulier pour une transmission de véhicule automobile, comprenant au moins un volant d'inertie destiné à être fixé en bout d'un vilebrequin par des vis engagées dans des orifices dudit volant et des moyens de retenue des vis avant fixation du volant primaire sur le vilebrequin, caractérisé en en ce que les moyens de retenue des vis comprennent un anneau formant des moyens déformables s'étendant radialement dans les orifices de passage des vis, ces moyens déformables étant positionnés axialement au niveau des orifices du volant primaire et s'appuyant sur les vis de façon à assurer leur maintien en position axiale.

Par conséquent, l'encombrement axial desdits moyens de retenue, et donc du volant moteur, peut être réduit.

Selon l'invention, les moyens déformables comportent au moins un anneau déformable monté dans une gorge annulaire du volant d'inertie débouchant radialement dans les orifices, la périphérie radialement interne ou externe de l'anneau s'étendant au travers des orifices de passage des vis.

De préférence, le volant d'inertie comporte un moyeu central, les orifices de passage des vis étant répartis circonférentiellement autour du moyeu central, l'anneau déformable étant monté entre le moyeu et les orifices de passage des vis, la périphérie radialement externe de l'anneau s'étendant au travers desdits orifices.

Selon une variante de réalisation ne faisant pas partie de l'invention, les moyens de retenue comportent des inserts déformables montés dans des gorges ménagées en périphérie des orifices et débouchant radialement dans ceux-ci, chaque insert s'étendant au travers d'un orifice de passage d'une vis.

Avantageusement, les inserts et les gorges sont de forme allongée et parallèles à l'axe des orifices.

Les inserts peuvent avoir une section circulaire ou polygonale, par exemple carrée ou rectangulaire.

Les moyens déformables sont plastiquement déformables ou élastiquement déformables et sont réalisés par exemple en matière plastique ou en élastomère.

Dans un mode de réalisation, le volant moteur comporte un second volant d'inertie coaxial audit premier volant d'inertie destiné à être fixé au bout du vilebrequin et un amortisseur de torsion ainsi que des moyens de frottement montés entre les deux volants d'inertie pour l'absorption et l'amortissement des vibrations et des acyclismes de rotation.

L'invention concerne également un double embrayage, notamment pour véhicule automobile, caractérisé en ce qu'il est couplé à volant moteur du type précité.

L'invention sera mieux comprise et d'autres détails, caractéristiques et avantages de l'invention apparaîtront à la lecture de la description suivante faite à titre d'exemple non limitatif en référence aux dessins annexés dans lesquels :
- la figure 1 est une demi vue en coupe axiale d'un double embrayage couplé à un double volant amortisseur de l'art antérieur ;
- la figure 2 est une vue de face d'un double volant amortisseur selon une première forme de réalisation de l'invention ;
- la figure 3 est une demi vue en coupe axiale, selon la ligne III-III de la figure 2 ;
- la figure 4 est une vue en perspective d'une partie du double amortisseur des figures 2 et 3 ;
- la figure 5 est une vue correspondant à la figure 3, d'une deuxième forme de réalisation de l'invention ;
- les figures 6 et 7 sont des vues correspondant à la figure 4, de variantes de réalisation ne faisant pas partie de l'invention.

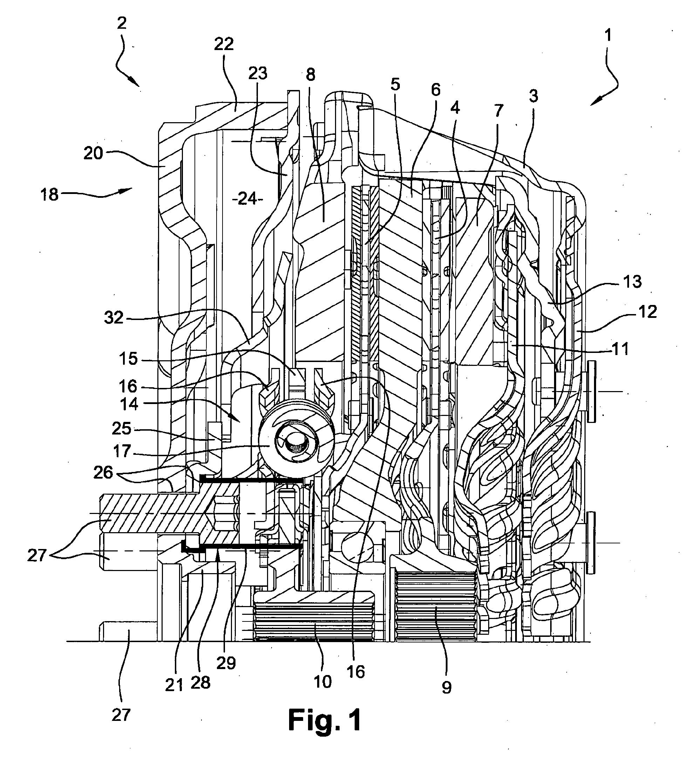

On se réfère tout d'abord à la figure 1 qui représente un double embrayage 1 pour un véhicule automobile, couplé à un volant moteur du type double volant amortisseur 2 de l'art antérieur.

Le double embrayage 1 comporte un couvercle 3 en forme de cloche dans lequel sont logés deux disques de friction 4, 5, un plateau de réaction 6 monté entre les deux disques de friction 4, 5 et deux plateaux de pression 7, 8 montés en opposition de part et d'autre du plateau de réaction 6. Les périphéries internes des disques de friction 4, 5 sont reliées à des moyeux cannelés 9, 10 destinés à être couplés en rotation avec deux arbres coaxiaux d'une boîte de vitesses (non représentés), comme cela est notamment connu du document FR 2 860 845 et du document FR 2 938 029 au nom de la Demanderesse.

Le double embrayage 1 comporte en outre deux diaphragmes annulaires 11, 12 destinés à actionner respectivement les deux plateaux de pression 7, 8. Le diaphragme 12 actionne le plateau de pression 8 par l'intermédiaire du couvercle 3. Un organe annulaire 13, disposé entre les deux diaphragmes 11, 12, sert à leur l'entretoisement axial. Comme cela est connu de l'homme du métier, les diaphragmes 11, 12 comportent des doigts radiaux à leur périphérie interne et pivotent autour d'une zone circulaire d'appui. Le déplacement axial des extrémités des doigts des diaphragmes 11, 12 entraîne le déplacement axial de leur périphérie externe dans le sens opposé ou dans le même sens, selon la position radiale de la zone d'appui.

Chaque disque de friction 4, 5 peut ainsi être serré entre le plateau de réaction 6 et le plateau de pression correspondant 7, 8, par le diaphragme correspondant 11, 12.

Le disque de pression 5 est relié au moyeu 10 par l'intermédiaire d'un amortisseur de torsion 14 comportant un voile annulaire central 15 de part et d'autre duquel sont disposées deux rondelles de guidage 16 solidaires en rotation l'une de l'autre. Le voile 15 est fixé au moyeu 10 et les rondelles de guidage 16 sont fixées au disque de friction 5.

Le voile annulaire 15 comporte des fenêtres de logement de ressorts hélicoïdaux 17. Une des extrémités de chaque ressort 17 prend appui sur des portées ménagées dans les rondelles de guidage 16, l'autre extrémité du ressort 17 prenant appui contre l'un des bords d'extrémité d'une fenêtre du voile 15.

Le double volant amortisseur 2 comprend un volant d'inertie primaire 18 comportant un flasque annulaire radial 20 dont la périphérie interne est raccordée à un moyeu 21 et dont la périphérie externe est raccordée à une partie cylindrique 22 s'étendant en direction du double embrayage.

Un couvercle annulaire radial 23 est fixé sur le bord libre de la partie cylindrique 22, de façon à délimiter, avec le volant primaire, un espace 24 de logement d'un amortisseur de torsion.

Le double volant amortisseur 2 comporte en outre un volant d'inertie secondaire coaxial au volant primaire 18 et portant un voile annulaire (non représenté) couplé au couvercle 3 du double embrayage 1, par l'intermédiaire d'une pièce de connexion 32.

Un amortisseur de torsion comprenant des ressorts et des moyens de frottement pour l'absorption et l'amortissement des vibrations et des acyclismes de rotation est monté entre les deux volants d'inertie, comme cela est connu par exemple du document FR 2 938 029. L'amortisseur de torsion est logé dans l'espace 24.

Le volant moteur comporte également une rondelle de répartition d'efforts 25, appliquée sur le flasque annulaire 20. Le flasque annulaire 20 et la rondelle de répartition 25 comportent des orifices axiaux 26 en regard, situés radialement à proximité du moyeu 21.

Le volant primaire 18 est destiné à être fixé en bout d'un vilebrequin par des vis 27 engagées dans les orifices 26 du flasque 20 et de la rondelle de répartition 25.

On a schématisé dans la figure 1 des moyens 28 destinés à la retenue des vis 27 entre les deux volants avant fixation du volant primaire 18 sur le vilebrequin. Ces moyens de retenue 28 sont similaires à ceux décrits dans le document FR 2 765 293 et sont constitués par un organe annulaire fixé au volant primaire et présentant des orifices de passage des vis et des pattes longitudinales délimitant des cages cylindriques 29 s'étendant axialement vers le double embrayage depuis les bords des orifices précités, ces pattes étant destinées à s'appliquer élastiquement sur les têtes des vis 27. Avant montage du double volant amortisseur 2 sur le vilebrequin, les vis 27 traversant les orifices précités sont maintenues dans les cages 29. Lors de la fixation du double volant amortisseur 2 sur l'extrémité du vilebrequin par vissage des vis 27, les têtes des vis 27 se déplacent à l'intérieur des cages 29 jusqu'à s'appuyer sur la rondelle de répartition 25 appliqué sur le volant primaire 18. Les efforts axiaux exercés par les vis sont répartis sur toute la surface de la rondelle de répartition 25 afin de ne pas endommager le flasque annulaire 20 du volant primaire 18, réalisé en un matériau moins dur que la rondelle de répartition 25.

On remarque que ces moyens de retenue 28 présentent un encombrement axial important. Comme cela est visible à la figure 1, si un tel montage devait être réalisé, les moyens de retenue 28 interfèreraient avec dés éléments du double embrayage 1, en particulier avec l'amortisseur de torsion 14 et avec le moyeu 10. Un tel montage ne peut donc pas être effectué.

Afin de remédier à cet inconvénient, l'invention propose un volant moteur 2 dans lequel les moyens de retenue des vis 27 comprennent des moyens déformables s'étendant radialement dans les orifices 26 de passage des vis 27 et s'appuyant sur les vis 27 de façon à assurer leur maintien en position axiale.

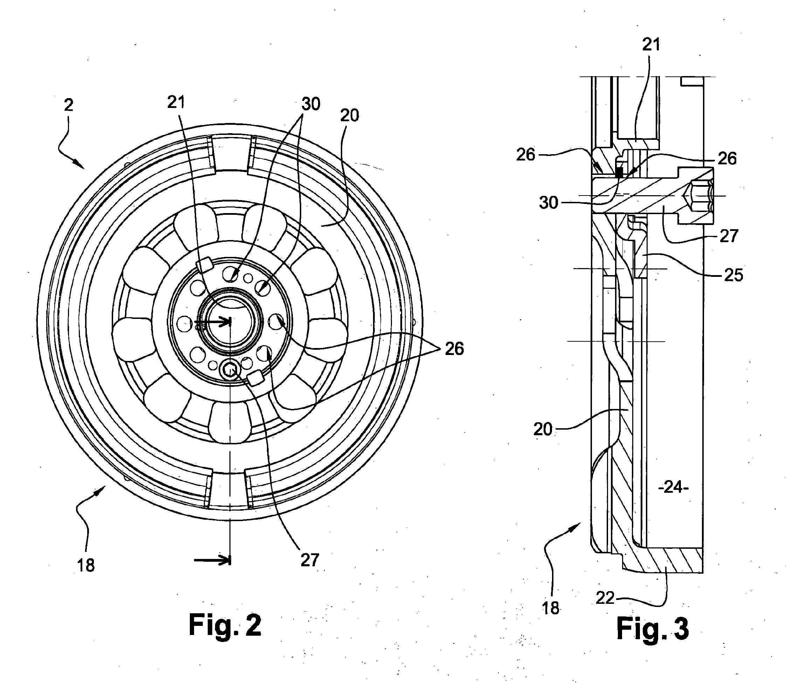

Les figures 2 à 4 illustrent une première forme de réalisation dans laquelle les moyens de retenue des vis comportent au moins un anneau déformable 30 monté dans une gorge annulaire de la rondelle de répartition 25, cette gorge débouchant radialement dans les orifices 26.

L'anneau 30 est monté entre le moyeu 21 et les orifices 26 de passage des vis 27, la périphérie radialement externe de l'anneau 30 s'étendant au travers desdits orifices 26.

L'anneau 30 est plastiquement ou élastiquement déformable et est par exemple réalisé en matière plastique ou en élastomère.

Les dimensions de l'anneau 30 sont déterminées de façon à ce que sa périphérie radialement externe soit en appui contre les vis 27 de façon à assurer son maintien. Pour cela, il y a notamment lieu de prendre en compte le jeu de fonctionnement ménagé entre les vis 27 et les orifices 26.

De cette manière, les vis 27 sont maintenues axialement en position avant leur vissage dans le vilebrequin du moteur. Lors de ce vissage, les vis 27 avancent progressivement jusqu'à ce que leurs têtes viennent en appui contre la rondelle de répartition 25. Ce vissage n'est pas empêché par l'effort radial exercé par l'anneau plastique 30.

En variante (non représentée), l'anneau 30 peut être monté dans une gorge formée à l'extérieur des orifices 26 de passage des vis 27, la périphérie radialement interne de l'anneau 30 s'étendant alors au travers desdits orifices 26 de façon à prendre appui radialement contre les vis 27.

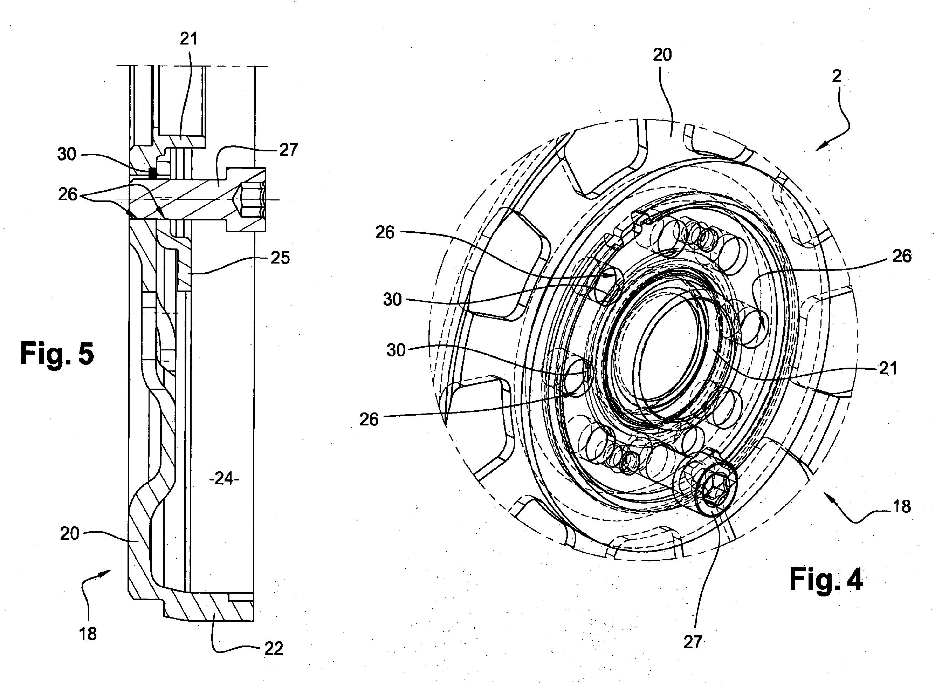

La figure 5 illustre une deuxième forme de réalisation de l'invention dans laquelle l'anneau 30 est monté dans une gorge annulaire du flasque annulaire 20, débouchant radialement dans les orifices 26.

L'anneau 30 est monté entre le moyeu 21 et les orifices 26 de passage des vis 27, la périphérie radialement externe de l'anneau 30 s'étendant au travers desdits orifices 26, de façon à prendre appui radialement contre les vis 27.

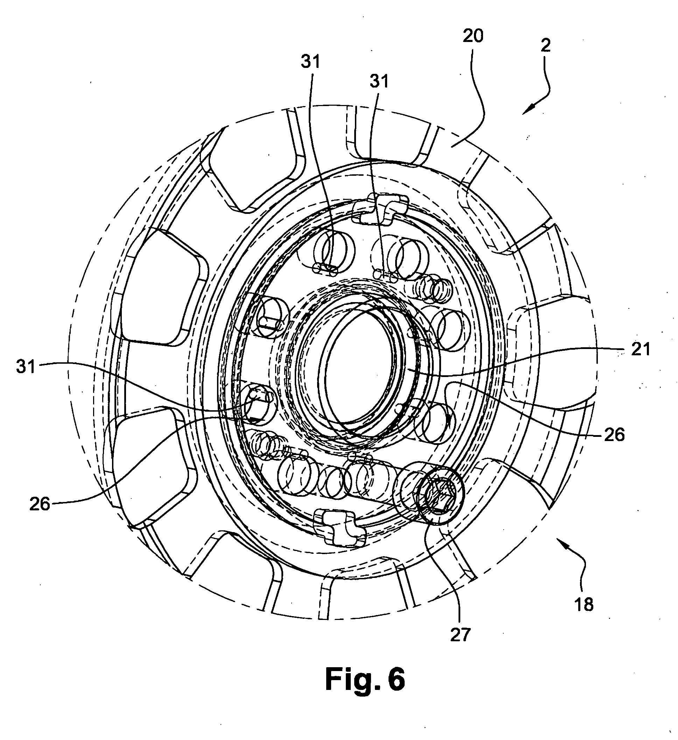

La figure 6 représente une troisième forme de réalisation n'appartenant pas à l'invention dans laquelle les moyens de retenue comportent des inserts 31 déformables montés dans des gorges ménagées en périphérie des orifices 26 et débouchant radialement dans ceux-ci, chaque insert 31 s'étendant au travers d'un orifice 26 de passage d'une vis 27.

Les inserts 31 et les gorges sont de forme allongée et parallèles à l'axe des orifices 26. Comme cela est visible à la figure 6, les inserts 31 ont une section circulaire.

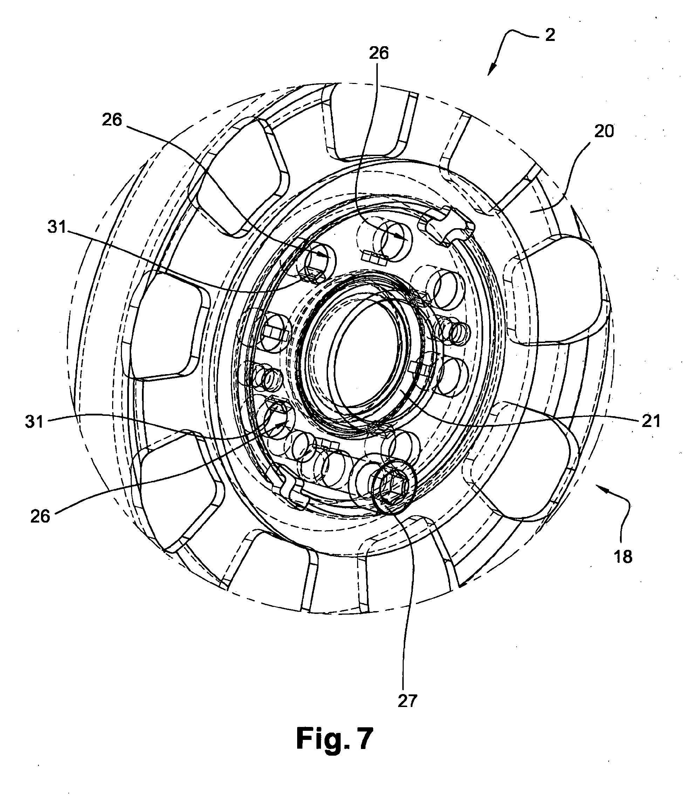

Dans une variante de la troisième forme de réalisation représentée à la figure 7, les inserts 31 ont une section polygonale, par exemple carrée ou rectangulaire.

Les inserts 31 sont préférentiellement disposés à proximité du moyeu central 21 et viennent en appui contre la surface des vis 27 de manière à assurer leur retenue avant vissage dans le vilebrequin.

L'invention propose ainsi un volant moteur 2 comportant des moyens 30 de retenue des vis 27 qui sont axialement peu encombrants. Un tel volant moteur 2 est particulièrement adapté pour équiper un double embrayage 1.

Bien que l'invention soit ici décrite en relation avec un double volant amortisseur, elle ne se limite pas à cette application particulière et l'on pourra prévoir de l'utiliser avec tous types de volant moteur, sans sortir du cadre de l'invention, et en particulier dans la cadre d'un volant moteur, rigide ou flexible, à un seul volant d'inertie.

## Revendications

1. Volant moteur (2), en particulier pour une transmission de véhicule automobile, comprenant au moins un volant d'inertie primaire (18) destiné à être fixé en bout d'un vilebrequin par des vis (27) engagées dans des orifices (26) dudit volant d'inertie (18), et des moyens de retenue (30) des vis (27) avant fixation du volant d'inertie (18) sur le vilebrequin, caractérisé en en ce que les moyens de retenue (30) des vis (27) comprennent un anneau formant des moyens déformables s'étendant radialement dans les orifices (26) de passage des vis (27), ces moyens déformables étant positionnés axialement au niveau des orifices du volant primaire et s'appuyant sur les vis (27) de façon à assurer leur maintien en position axiale.

2. Volant moteur (2) selon la revendication 1, **caractérisé en ce que** les moyens déformables comportent au moins un anneau déformable (30) monté dans une gorge annulaire du volant d'inertie (18) débouchant radialement dans les orifices (26), la périphérie radialement interne ou externe de l'anneau (30) s'étendant au travers des orifices (26) de passage des vis (27).

3. Volant moteur (2) selon la revendication 2, **caractérisé en ce que** le volant d'inertie (18) comporte un moyeu central (21), les orifices (26) de passage des vis (27) étant répartis circonférentiellement autour du moyeu central (21), l'anneau déformable (30) étant monté entre le moyeu (21) et les orifices (26) de passage des vis (27), la périphérie radialement externe de l'anneau (30) s'étendant au travers desdits orifices (26).

4. Volant moteur (2) selon la revendication 1, **caractérisé en ce qu'**il comprend une rondelle de répartition d'effort (25) et **en ce que** les moyens déformables comportent un anneau déformable (30) monté dans une gorge annulaire de la rondelle de répartition d'effort (25).

5. Volant moteur (2) selon l'une des revendications 1 à 4, **caractérisé en ce que** les moyens déformables (30) sont plastiquement ou élastiquement déformables.

6. Volant moteur (2) selon l'une des revendications 1 à 5, **caractérisé en ce que** les moyens déformables (30) sont en matière plastique ou en élastomère.

7. Volant moteur (2) selon l'une des revendications 1 à 6, **caractérisé en ce qu'**il comporte un second volant d'inertie coaxial audit premier volant d'inertie destiné à être fixé au bout du vilebrequin et un amortisseur de torsion ainsi que des moyens de frottement montés entre les deux volants d'inertie pour l'absorption et l'amortissement des vibrations et des acyclismes de rotation.

8. Double embrayage (1), notamment pour véhicule automobile, **caractérisé en ce qu'**il est couplé à un volant moteur (2) selon l'une des revendications 1 à 7.

## Patentansprüche

1. Schwungrad (2), insbesondere für ein Kraftfahrzeuggetriebe, das mindestens ein Primärschwungrad (18), das dazu bestimmt ist, am Ende einer Kurbelwelle durch Schrauben (27) befestigt zu werden, die in Öffnungen (26) des Schwungrads (18) eingeführt sind, und Halteeinrichtungen (30) der Schrauben (27) vor der Befestigung des Schwungrads (18) an der Kurbelwelle aufweist, **dadurch gekennzeichnet, dass** die Halteeinrichtungen (30) der Schrauben (27) einen Ring enthalten, der verformbarer Einrichtungen bildet, die sich radial in den Durchgangsöffnungen (26) der Schrauben (27) erstrecken, wobei diese verformbaren Einrichtungen axial im Bereich der Öffnungen des Primärschwungrads positioniert sind und auf den Schrauben (27) aufliegen, um ihren Halt in axialer Stellung zu gewährleisten.

2. Schwungrad (2) nach Anspruch 1, **dadurch gekennzeichnet, dass** die verformbaren Einrichtungen mindestens einen verformbaren Ring (30) aufweisen, der in eine ringförmige Rille des Schwungrads (18) montiert ist, die radial in die Öffnungen (26) mündet, wobei der radial innere oder äußere Umfang des Rings (30) sich durch die Durchgangsöffnungen (26) der Schrauben (27) hindurch erstreckt.

3. Schwungrad (2) nach Anspruch 2, **dadurch gekennzeichnet, dass** das Schwungrad (18) eine zentrale Nabe (21) aufweist, wobei die Durchgangsöffnungen (26) der Schrauben (27) in Umfangsrichtung um die zentrale Nabe (21) verteilt sind; wobei der verformbare Ring (30) zwischen der Nabe (21) und den Durchgangsöffnungen (26) der Schrauben (27) montiert ist, wobei der radial äußere Umfang des Rings (30) sich durch die Öffnungen (26) hindurch erstreckt.

4. Schwungrad (2) nach Anspruch 1, **dadurch gekennzeichnet, dass** es eine Kraftverteilungsscheibe (25) enthält, und dass die verformbaren Einrichtungen einen verformbaren Ring (30) aufweisen, der in eine ringförmige Rille der Kraftverteilungsscheibe (25) montiert ist.

5. Schwungrad (2) nach einem der Ansprüche 1 bis 4, **dadurch gekennzeichnet, dass** die verformbaren Einrichtungen (30) plastisch oder elastisch verformbar sind.

6. Schwungrad (2) nach einem der Ansprüche 1 bis 5, **dadurch gekennzeichnet, dass** die verformbaren Einrichtungen (30) aus Kunststoff oder Elastomermaterial sind.

7. Schwungrad (2) nach einem der Ansprüche 1 bis 6, **dadurch gekennzeichnet, dass** es ein zweites Schwungrad koaxial zum ersten Schwungrad, das dazu bestimmt ist, am Ende der Kurbelwelle befestigt zu werden, und einen Torsionsdämpfer sowie Reibungseinrichtungen aufweist, die zwischen den zwei Schwungrädern zur Absorption und Dämpfung der Schwingungen und Rotations-Azyklismen montiert sind.

8. Doppelkupplung (1), insbesondere für ein Kraftfahrzeug, **dadurch gekennzeichnet, dass** sie mit einem Schwungrad (2) nach einem der Ansprüche 1 bis 7 gekoppelt ist.

## Claims

1. Engine flywheel (2), in particular for a motor vehicle transmission, comprising at least one primary inertia flywheel (18) intended to be fixed at the end of a crankshaft by bolts (27) engaged in orifices (26) of the said inertia flywheel (18), and means (30) for retaining the bolts (27) before fixing the inertia flywheel (18) to the crankshaft, **characterized in that** the means (30) for retaining the bolts (27) comprise a ring forming deformable means extending radially in the passage orifices (26) for the bolts (27), these deformable means being positioned axially at the orifices of the primary flywheel and pressing on the bolts (27) so as to maintain them in an axial position.

2. Engine flywheel (2) according to Claim 1, **characterized in that** the deformable means comprise at least one deformable ring (30) mounted in an annular groove of the inertia flywheel (18) that opens radially into the orifices (26), the radially internal or external periphery of the ring (30) extending through the passage orifices (26) for the bolts (27).

3. Engine flywheel (2) according to Claim 2, **characterized in that** the inertia flywheel (18) comprises a central hub (21), the passage orifices (26) for the bolts (27) being distributed circumferentially around the central hub (21), the deformable ring (30) being mounted between the hub (21) and the passage orifices (26) for the bolts (27), the radially external periphery of the ring (30) extending through the said orifices (26).

4. Engine flywheel (2) according to Claim 1, **characterized in that** it comprises a force-distribution washer (25) and **in that** the deformable means comprise a deformable ring (30) mounted in an annular groove of the force-distribution washer (25).

5. Engine flywheel (2) according to one of Claims 1 to 4, **characterized in that** the deformable means (30) are plastically or elastically deformable.

6. Engine flywheel (2) according to one of Claims 1 to 5, **characterized in that** the deformable means (30) are made of plastic material or of elastomer.

7. Engine flywheel (2) according to one of Claims 1 to 6, **characterized in that** it comprises a second inertia flywheel coaxial to the said first inertia flywheel intended to be fixed to the end of the crankshaft and a torsion damper and also friction means mounted between the two inertia flywheels in order to absorb and damp vibrations and rotation irregularities.

8. Dual clutch (1), in particular for a motor vehicle, **characterized in that** it is coupled to an engine flywheel (2) according to one of Claims 1 to 7.
